# EUROPEAN PATENT APPLICATION

(11) **EP 4 678 274 A1**
(43) Date of publication of application: **14.01.2026**
(21) Application number: 24187576.4
(22) Date of filing: 10.07.2024
(51) Int. Cl.: B01D 63/08, H01M 8/04119

(54) **METHOD OF MANUFACTURING STACK PLATE OF HUMIDIFIER AND STACK PLATE**

(71) Applicant: MANN+HUMMEL GmbH, 71636 Ludwigsburg (DE)
(72) Inventor: SCHARMACH, Sebastian Robert, 71636 Ludwigsburg (DE); FRICK, Thorsten, 71636 Ludwigsburg (DE); KAISER, Ralf, 71636 Ludwigsburg (DE)
(74) Representative: Mann + Hummel Intellectual Property

(57) **Abstract**

A method of manufacturing a stack plate (100, 102) of a humidifier, in particular for a fuel cell stack, comprises providing a semipermeable membrane (10) to be arranged over a fluid passage (50) of a plastic frame (22) and arranged between the plastic frame (22) and a gasket (32), depositing a plastic layer (20) forming the plastic frame (22) to a first side (12) of the semipermeable membrane (10), and depositing a gasket layer (30) forming the gasket (32) to a second side (14) of the semipermeable membrane (10), the second side (14) opposing the first side (12) at least in some areas (38) where the semipermeable membrane (10) is supported by the plastic frame (22) on the first side (12).

## Description

### Technical Field

Embodiments relate to a method of manufacturing a stack plate of a humidifier, in particular for a humidifier of a fuel cell stack, as well as to a stack plate of a humidifier.

### Background Art

Humidifier technology for fuel cell systems focuses on the separation between water of exhaust gases of a fuel cell stack and supply air for the fuel cell stack with membrane elements which are stacked together to create a sufficient effective area for the separation. Assembling steel sheets including the membrane together and overmolding every single stack plate finally with liquid silicone rubber to achieve the sealing functionality between each stack plate are frequent solutions.

EP 1 223 629 B1 discloses a fuel battery comprising a gasket lip made of a liquid rubber hardened material and integrally formed on a surface of a flat plate or a groove portion applied to said surface wherein the flat plate is an electrode. A flat surface portion is provided with a predetermined width being in contact with an electrolyte membrane portion or with an ion exchange membrane is formed in at least one of a pair of said gasket lips arranged so as to hold said electrolyte membrane portion or said ion exchange membrane between them.

EP 1 391 956 B1 discloses a fuel cell comprising a membrane electrode complex with a gasket for sealing the reaction gas. The gasket is formed on a surface of a gas diffusion layer so as to oppose to a separator. A gasket forming portion of each gas diffusion layer has a lower void content than a portion which is in contact with a catalyst layer of the membrane. A through hole passes through both the first and second gas diffusion layers, and the gasket is arranged in the first and second gas diffusion layers via the through hole provided in each of the first and second gas diffusion layers.

US 2011/0305967 A1 discloses a fuel cell stack including a plurality of membrane-electrode assemblies, a plurality of separators in close contact with the membrane-electrode assemblies between the membrane electrode assemblies, and gaskets provided on the separators. Each of the separators includes an anode separator having first through holes and a cathode separator in contact with the anode separator and having the second through holes. Each of the gaskets includes a penetrating portion filled in the first through holes and penetrating the anode separator and the cathode separator and a sealing portion coupled to the penetrating portion and protruding from outer surfaces of the anode and cathode separators in a thickness direction of the anode separator and the cathode separator.

### Summary

An object of the embodiments is to provide a method of manufacturing a stack plate of a humidifier, in particular for a humidifier of a fuel cell stack.

A further object of the embodiments is to provide a stack plate of a humidifier, manufactured by the method.

According to an aspect of the embodiments the object is achieved by a method of manufacturing a stack plate of a humidifier, in particular for a fuel cell stack, the method comprising providing a semipermeable membrane to be arranged over a fluid passage of a plastic frame and arranged between the plastic frame and a gasket, depositing a plastic layer forming the plastic frame to a first side of the semipermeable membrane, and depositing a gasket layer forming the gasket to a second side of the semipermeable membrane, the second side opposing the first side at least in some areas where the semipermeable membrane is supported by the plastic frame on the first side.

According to a further aspect of the embodiments the further object is achieved by a stack plate of the humidifier manufactured with the method, the stack plate comprising the semipermeable membrane, the plastic frame surrounding the semipermeable membrane arranged over the fluid passage of the plastic frame, the plastic frame being bonded to the first side of the semipermeable membrane. The stack plate further comprises the gasket is bonded to the second side opposing the first side at least in the some areas where the semipermeable membrane is supported by the plastic frame arranged on the first side.

Advantageous embodiments are described in the dependent claims, the description and the drawings.

The proposed method focuses on the manufacturing strategy creating a stack plate made by plastic materials including a sealing function and the overmolding/decor molding of the membrane. Advantageously, the main separation element, i.e. the membrane, of each stack plate is used as part of the leak-tight bonding element between two materials which generally cannot bond or cannot bond leak-tight without additional manufacturing steps and/or additional bonding agents and/or additional mechanical bonding connections to achieve in one part several functionalities, namely the separation function of the membrane, the stackability through the stiff frame area and the sealing function through the gasket. By using the membrane as bonding agent, the sealing function of the gasket has two effects, mechanically through grouting to the frame part and through entering into the membrane. Advantageously, a stackable frame part including the gasket function can be produced in fully automatic production mode without manual support. Additionally, the usage of the membrane as bonding agent also allows to vary the sequence independently either if the plastic material or the gasket layer will be injected first.

Thus, using the membrane as bonding element, a functional integrated plastic part with separation, sealing function and easy assembly possibility because of the form stability is created. The gasket layer with the sealing function is injected directly on the membrane. The plastic layer is injected directly on the other side of the membrane.

The membrane may be a semipermeable membrane separating the wet exhaust gas flow channel from the dry supply air flow channel. The semipermeable membrane can be designed, for example, as a PFSA (perfluorosulfonic acid) membrane. Such membranes are also commonly used as proton exchange membranes. The membrane is airtight but permeable to moisture.

As a material for the plastic layer advantageously glass fibre reinforced polypropylene (PP GF 30) or polyamide (PA9T) may be used.

Advantageously, with the proposed method of manufacturing a stack plate of a humidifier less investment is needed because of less equipment for manufacturing needed as well as shorter cycle times because of less manufacturing steps. Therefore, advantage is possible in cost and performance in the market.

According to a favorable embodiment of the method, the gasket layer may be deposited as a liquid silicone rubber or a polyurethane foam. The polyurethane foam may be a monocomponent polyurethane foam. Additionally or alternatively, the polyurethane foam may form a closed-pore structure. These materials advantageously may be bonded to the membrane and form a stable gasket for sealing the stack plates against each other when stacked in the humidifier.

According to a favorable embodiment of the method, the method may further comprise forming recesses and corresponding protrusions perpendicular to the first side and the second side of the semipermeable membrane in the plastic layer by hydraulic ejector movements after the depositing the plastic layer to the first side of the semipermeable membrane, in particular after curing the plastic layer. Thus, forming the plastic layer to the frame in a stabilizing design may be performed in one manufacturing step.

According to a favorable embodiment of the method, the method may further comprise cutting the semipermeable membrane at an outer circumference in parallel with a compression injection mold of the plastic layer. Thus, forming the desired geometrical dimensions of the stack plate may be performed in one manufacturing step.

According to a favorable embodiment, the method may further comprise forming a grid layer on the second side of the semipermeable membrane deposited with the gasket layer. Advantageously, a grid may be provided in the same manufacturing step for influencing an air flow between the stack plates for efficient moisture transfer through the membrane.

The proposed stack plate comprises a stack plate made by plastic materials including a sealing function and the overmolding/decor molding of the membrane. Advantageously, the main separation element, i.e. the membrane, of each stack plate is used as part of the leak-tight bonding element between two materials which generally cannot bond or cannot bond leak-tight without additional manufacturing steps and/or additional bonding agents and/or additional mechanical bonding connections to achieve in one part several functionalities, namely the separation function of the membrane, the stackability through the stiff frame area and the sealing function through the gasket. By using the membrane as bonding agent, the sealing function of the gasket has two effects, mechanically through grouting to the frame part and through entering into the membrane.

Thus, using the membrane as bonding element, the stack plate is a functional integrated plastic part with separation, sealing function and easy assembly possibility because of the form stability.

The membrane may be a semipermeable membrane separating the wet exhaust gas flow channel from the dry supply air flow channel. The semipermeable membrane can be designed, for example, as a PFSA (perfluorosulfonic acid) membrane. Such membranes are also commonly used as proton exchange membranes. The membrane is airtight but permeable to moisture.

As a material for the plastic layer of the plastic frame advantageously glass fibre reinforced polypropylene (PP GF 30) or polyamide (PA9T) may be used.

According to a favorable embodiment of the stack plate, the gasket may comprise a silicone rubber or a polyurethane. The polyurethane may be a monocomponent polyurethane. Additionally or alternatively, the polyurethane may have a closed-pore structure. These materials advantageously may be bonded to the membrane and form a stable gasket for sealing the stack plates against each other when stacked in the humidifier.

According to a favorable embodiment of the stack plate, the plastic frame may have a rectangular shape, and the gasket may be arranged on opposing transverse ends of the semipermeable membrane or on opposing longitudinal ends of the semipermeable membrane. Advantageously, a humidifier stack may be assembled with the stack plates, where fluid passages for the dry supply air and the wet exhaust gas may be arranged crosswise alternatingly in successive stack plates.

According to a favorable embodiment of the stack plate, the state plate may further comprise a grid layer arranged on the second side of the semipermeable membrane to which the gasket is bonded. Advantageously, a grid may be provided in the same manufacturing step for influencing an air flow between the stack plates for efficient moisture transfer through the membrane.

According to a favorable embodiment of the stack plate, the plastic frame may be arranged circumferentially on outer edges of longitudinal and transverse ends of the semipermeable membrane. By this way the stack plate is stabilized by the frame for proper assembly to a humidifier stack.

According to a favorable embodiment of the stack plate, the gasket may be arranged on the opposing transverse ends of the semipermeable membrane. Thus, a fluid passage may be provided through the longitudinal ends of the stack plate.

According to a favorable embodiment of the stack plate, the gasket may be arranged on outer edges of the transverse ends of the semipermeable membrane. Thus, maximum space is provided for the fluid passage through the longitudinal ends of the stack plate.

According to a favorable embodiment of the stack plate, the gasket may be arranged on the opposing longitudinal ends of the semipermeable membrane. Thus, a fluid passage may be provided through the transverse ends of the stack plate.

According to a favorable embodiment of the stack plate, the gasket may be arranged on outer edges of the longitudinal ends of the semipermeable membrane. Thus, maximum space is provided for the fluid passage through the transverse ends of the stack plate.

### Brief Description of Drawings

The embodiments together with the above-mentioned and other objects and advantages may best be understood from the following detailed description of the embodiments, but not restricted to the embodiments.
Fig. 1 is a stack plate of a humidifier, in particular for a humidifier of a fuel cell stack, according to embodiments, in a top view from a second side, with a section plane A-A indicated.
Fig. 2 is the stack plate in a sectional view A-A according to Fig. 1.
Fig. 3 is a stack plate according to other embodiments, in a top view from a second side, with a section plane B-B indicated.
Fig. 4 is the stack plate in a sectional view B-B according to Fig. 3.
Fig. 5 is a stack plate according to Fig. 1 with a grid layer according to further embodiments.
Fig. 6 is a flow chart of a method of manufacturing a stack plate of a humidifier, in particular for a humidifier of a fuel cell stack, according to embodiments.
Fig. 7 is a flow chart of the method of manufacturing a stack plate according to other embodiments.

### Description of Embodiments

In the drawings, like elements are referred to with equal reference numerals. The drawings are merely schematic representations, not intended to portray specific parameters of the embodiments. Moreover, the drawings are intended to depict only typical embodiments and therefore should not be considered as limiting the scope of the embodiments.

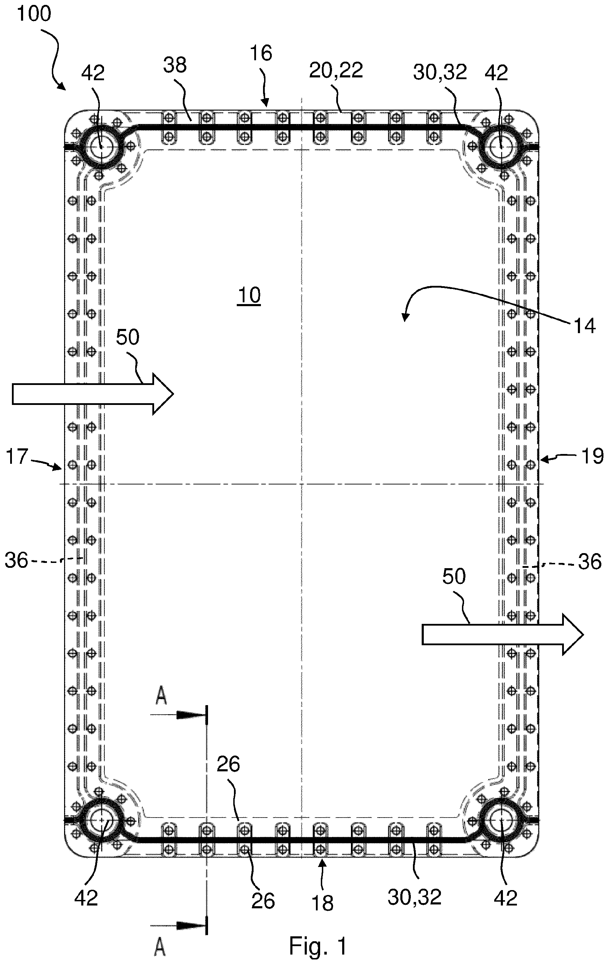

Fig. 1 depicts a stack plate 100 of a humidifier, in particular for a humidifier of a fuel cell stack, according to embodiments, in a top view from a second side 14, with a section plane A-A indicated.

The stack plate 100 comprises a plastic frame 22 surrounding a semipermeable membrane 10 arranged over a fluid passage 50 of the frame 22. The frame 22 is bonded to a first side 12 of the membrane 10. A gasket 32 is bonded to the second side 14 opposing the first side 12 at least in some areas 38 where the membrane 10 is supported by the frame 22 arranged at the first side 12.

The frame 22 has a rectangular shape in order to easily assemble a humidifier stack by stack plates 100. For aligning and fixing the stacked stack plates 100 in the humidifier stack the frame 22 provides mounting holes 42 in all four corners to insert connecting rods. In the embodiment shown in Fig. 1, the gasket 32 is arranged on opposing transverse ends 16, 18 of the membrane 10, in particular on outer edges of the transverse ends 16, 18 of the membrane 10.

The frame 22 is formed circumferentially on outer edges of longitudinal and transverse ends 16, 17, 18, 19 of the membrane 10.

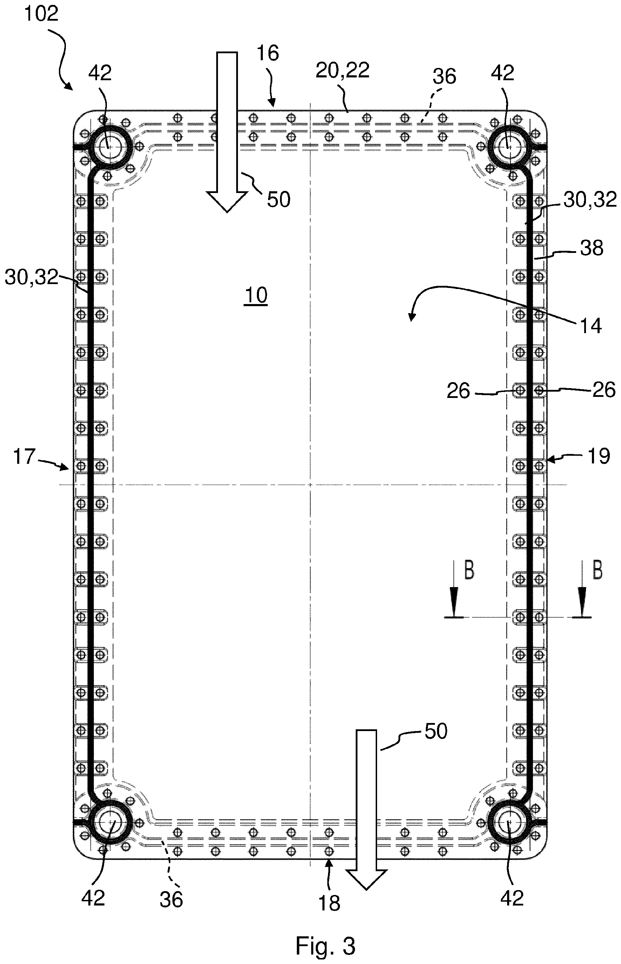

The frame 22 exhibits a groove 36 on the longitudinal ends 17, 19 on the back side. Thus, if the stack plate 100 is stacked to an alternative stack plate 100, shown in Fig. 3, where the gasket 32 is arranged on opposing longitudinal ends 17, 19 of the membrane 10, the gasket 32 of the alternative stack plate 100 may cooperate with the groove 36.

The fluid passage 50 is provided on the second side 14 of the membrane 10. Either wet exhaust gas or dry supply air is entering through one of the longitudinal ends 17, 19 and exiting through the other of the longitudinal ends 19, 17.

If the gasket 32 is arranged on the opposing longitudinal ends 17, 19, as shown in Fig. 3, the fluid passage 50 is provided through the transverse ends 16, 18 with dry supply air or wet exhaust gas.

The frame 22 may be formed by a plastic layer 20 deposited to the first side 12 of the membrane 10. The gasket 32 may be formed by a gasket layer 30 deposited to the second side 14 of the membrane 10 opposing the first side 12 at least in some areas 38 where the membrane 10 is supported by the plastic frame 22 on the first side 12.

The membrane 10 may be a semipermeable membrane separating the wet exhaust gas flow channel from the dry supply air flow channel. The semipermeable membrane can be designed, for example, as a PFSA (perfluorosulfonic acid) membrane. Such membranes are also commonly used as proton exchange membranes. The membrane is airtight but permeable to moisture.

As a material for the plastic frame 22 advantageously glass fibre reinforced polypropylene, such as PP GF 30, or polyamide, such as PA9T, may be used.

The gasket 32 may comprise a silicone rubber or a polyurethane. In particular, the polyurethane may be a monocomponent polyurethane. Alternatively or additionally the polyurethane may have a closed-pore structure.

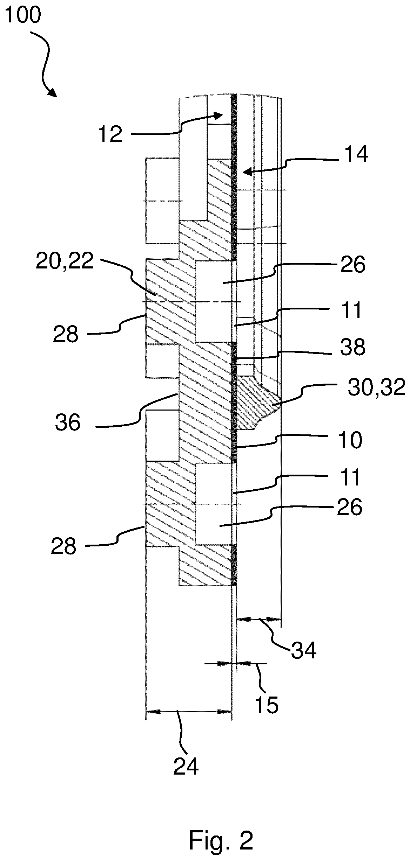

In Fig. 2 the stack plate 100 is depicted in a sectional view A-A according to Fig. 1.

The gasket 32 is to be seen in a cross section on the second side 14 of the membrane 10. The frame 22 is to be seen in a cross section on the first side 12 of the membrane 10. The gasket 32 is arranged in an area 38 of the membrane 10 which is supported on the back side by the frame 22.

The frame 22 exhibits a structured cross section with recesses 26 and corresponding protrusions 28. In an area of a recess 26 the membrane 10 is provided with an opening 11. Such a structured cross section enables the stack plates 100 to be stacked accordingly by inserting the protrusions 28 of a succeeding stack plate 100 to be inserted into the recess 26 of the current stack plate 100. Thus, a tight connection between successive stack plates 100 may be achieved.

The surrounding groove 36 in the frame 22 serves for accommodating gaskets 32 of an adjacent second stack plate 102 in areas 38 of the first stack plate 100 where no gasket 32 is on the second side 14. That means, if the gasket 32 is on transverse ends 16, 18 of the stack plate 100, the groove 36 of the frame 22 on longitudinal ends 17, 19 accommodates gaskets 32 of an adjacent stack plate 102.

Fig. 3 depicts a stack plate 102 according to other embodiments, in a top view from a second side 14, with a section plane B-B indicated.

This stack plate 102 resembles the embodiment shown in Fig. 1, yet the gasket 32 is formed on opposing longitudinal ends 17, 19 of the membrane 10 instead of the transverse ends 16, 18, in particular on outer edges of the longitudinal ends 17, 19. Correspondingly, the fluid passage 50 is provided through the transverse ends 16, 18 with dry supply air or wet exhaust gas.

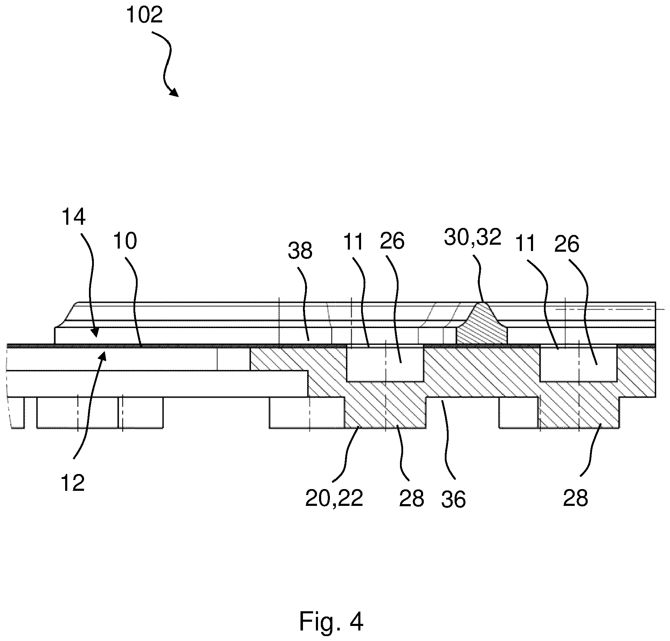

In Fig. 4 the stack plate 102 is depicted in a sectional view B-B according to Fig. 3. The cross sectional structure of the frame 22 and the gasket 32 provided at the membrane 10 is the same as for the stack plate 100 depicted in Fig. 2.

In humidifier stack plates 100 according to Figs. 1 and 2 with gaskets 32 on transverse ends 16, 18 and stack plates 102 according to Figs. 3 and 4 with gaskets 32 on longitudinal ends 17, 19 are stacked alternatingly. Thus the humidifier stack may be provided with one of the wet exhaust gas and the dry supply air on the longitudinal side of the humidifier stack and with the other one on the transverse side. The membrane 10 separates the wet exhaust gas and the dry supply air and enables moisture transfer from the wet exhaust gas to the dry supply air.

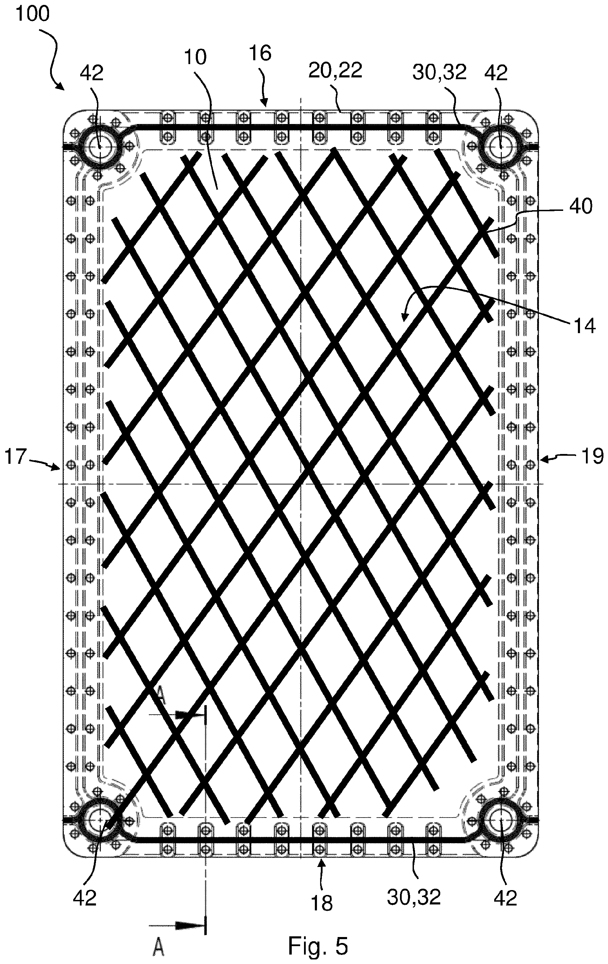

In Fig. 5 the stack plate 100 according to Fig. 1 is depicted with a grid layer 40 according to further embodiments.

The grid layer 40 is arranged on the second side 14 of the membrane 10 provided with the gasket 32. Advantageously, the grid may be provided for influencing an air flow between the stack plates 100 for efficient moisture transfer through the membrane 10.

In the embodiment shown in Fig. 5, the grid layer 40 exhibits a diagonal pattern. Other patterns for the grid layer may advantageously be used.

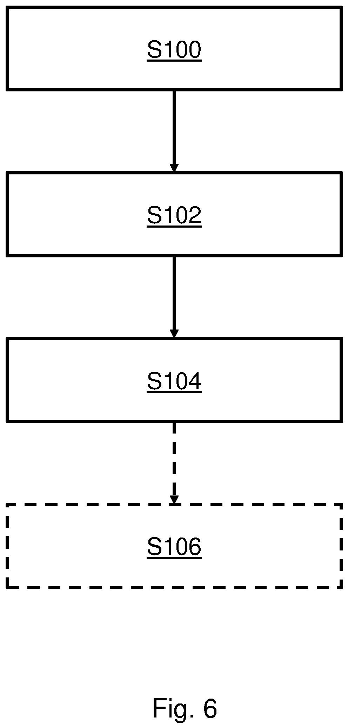

Fig. 6 depicts a flow chart of a method of manufacturing a stack plate 100, 102 of a humidifier, in particular for a humidifier of a fuel cell stack, according to embodiments.

According to the embodiments, the stack plate 100, 102 may be a manufactured by providing in step S100 a semipermeable membrane 10 to be arranged over a fluid passage 50 of a plastic frame 22, wherein the membrane 10 is intended to be arranged between the plastic frame 22 and a gasket 32.

In step S102 a plastic layer 20 forming the frame 22 is deposited to a first side 12 of the membrane 10.

In step S104 a gasket layer 30 of liquid silicone rubber, forming the gasket 32 is deposited to a second side 14 of the membrane 10 opposing the first side 12 at least in some areas 38 where the membrane 10 is supported by the plastic frame 22 on the first side 12.

In a further optional step S106 a grid layer 40 may be formed on the second side 14 of the membrane 10 deposited with the gasket layer 30. The grid layer 40 may advantageously not be bonded to the second side 14 of the membrane 10.

The sequence of first providing the different manufacturing steps is not mandatory. In particular, the gasket layer 30 may first be deposited before depositing the plastic layer 20.

In a further embodiment, the grid layer 40 may first be provided before depositing the plastic layer 20 and the gasket layer 30.

Further, recesses 26 and corresponding protrusions 28 perpendicular to the first sides 12 and the second sides 14 of the membrane 10 may be formed in the plastic layer 20 by hydraulic ejector movements after the depositing the plastic layer 20 to the first side 12 of the membrane 10, in particular after curing of the plastic layer 20.

Further, the membrane 10 may be cut at an outer circumference in parallel with a compression injection mold, in particular the compression injection mold of the plastic layer 20.

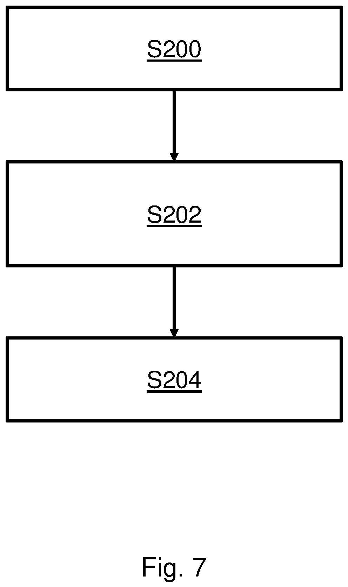

Fig. 7 depicts a flow chart of the method of manufacturing a stack plate 100, 102 according to other embodiments.

In the other embodiments, the step S200 corresponds to the step S100 of Fig. 6, where the membrane 10 is provided.

Also the step S202 corresponds to the step S102 of Fig. 6, where the plastic layer 20 forming the frame 22 is deposited to the first side 12 of the membrane 10.

Yet in step S204 the gasket layer 30 of a polyurethane foam, forming the gasket 32 is deposited to a second side 14 of the membrane 10 opposing the first side 12 at least in some areas 38 where the membrane 10 is supported by the plastic frame 22 on the first side 12. In particular, the polyurethane foam may be a monocomponent polyurethane foam. Alternatively or additionally the polyurethane foam may be forming a closed-pore structure.

As in the embodiment shown in Fig. 6, the sequence of the steps S202, depositing the plastic layer 20, and S204, depositing the gasket layer 30, may be swapped.

### Reference Signs List

- 10: membrane
- 11: opening
- 12: first side
- 14: second side
- 15: thickness
- 16: longitudinal end
- 17: transverse end
- 18: longitudinal end
- 19: transverse end
- 20: plastic layer
- 22: frame
- 24: thickness
- 26: recess
- 28: protrusion
- 30: gasket layer
- 32: gasket
- 34: thickness
- 36: groove
- 38: area
- 40: grid layer
- 42: mounting hole
- 50: fluid passage
- 100: stack plate
- 102: stack plate
- S100: providing membrane
- S102: depositing plastic layer
- S104: depositing liquid silicone rubber as gasket layer
- S106: providing grid layer
- S200: providing membrane
- S202: depositing plastic layer
- S204: depositing polyurethane foam as gasket layer

## Claims

1. A method of manufacturing a stack plate (100, 102) of a humidifier, in particular for a fuel cell stack, the method comprising:
providing a semipermeable membrane (10) to be arranged over a fluid passage (50) of a plastic frame (22) and arranged between the plastic frame (22) and a gasket (32);
depositing a plastic layer (20) forming the plastic frame (22) to a first side (12) of the semipermeable membrane (10); and
depositing a gasket layer (30) forming the gasket (32) to a second side (14) of the semipermeable membrane (10), the second side (14) opposing the first side (12) at least in some areas (38) where the semipermeable membrane (10) is supported by the plastic frame (22) on the first side (12).

2. The method according to claim 1, wherein the gasket layer (30) is deposited as a liquid silicone rubber.

3. The method according to claim 1, wherein the gasket layer (30) is deposited as a polyurethane foam, the polyurethane foam being a monocomponent polyurethane foam and/or the polyurethane foam forming a closed-pore structure.

4. The method according to any one of claims 1 to 3, further comprising forming recesses (26) and corresponding protrusions (28) perpendicular to the first side (12) and the second side (14) of the semipermeable membrane (10) in the plastic layer (20) by hydraulic ejector movements after the depositing the plastic layer (20) to the first side (12) of the semipermeable membrane (10).

5. The method according to any one of claims 1 to 4, further comprising cutting the semipermeable membrane (10) at an outer circumference in parallel with a compression injection mold of the plastic layer (20).

6. The method according to any one of claims 1 to 5, further comprising forming a grid layer (40) on the second side (14) of the semipermeable membrane (10) deposited with the gasket layer (30).

7. A stack plate (100, 102) of the humidifier manufactured with the method according to any one of claims 1 to 6, the stack plate (100, 102) comprising:
the semipermeable membrane (10);
the plastic frame (22) surrounding the semipermeable membrane (10) arranged over the fluid passage (50) of the plastic frame (22), the plastic frame (22) being bonded to the first side (12) of the semipermeable membrane (10); and
the gasket (32) bonded to the second side (14) opposing the first side (12) at least in the some areas (38) where the semipermeable membrane (10) is supported by the plastic frame (22) on the first side (12).

8. The stack plate according to claim 7, wherein the gasket (32) comprises a silicone rubber or a polyurethane, the polyurethane being a monocomponent polyurethane and/or the polyurethane having a closed-pore structure.

9. The stack plate according to claim 7 or 8, wherein the plastic frame (22) has a rectangular shape, and
the gasket (32) is arranged on opposing transverse ends (16, 18) of the semipermeable membrane (10) or on opposing longitudinal ends (17, 19) of the semipermeable membrane (10).

10. The stack plate according to any one of claims 7 to 9, further comprising a grid layer (40) arranged on the second side (14) of the semipermeable membrane (10) to which the gasket (32) is bonded.

11. The stack plate according to any one of claims 7 to 10, wherein the plastic frame (22) is arranged circumferentially on outer edges of longitudinal and transverse ends (16, 17, 18, 19) of the semipermeable membrane (10).

12. The stack plate according to claim 9, wherein the gasket (32) is arranged on the opposing transverse ends (16, 18) of the semipermeable membrane (10).

13. The stack plate according to claim 12, wherein the gasket (32) is arranged on outer edges of the transverse ends (16, 18) of the semipermeable membrane (10).

14. The stack plate according to claim 9, wherein the gasket (32) is arranged on the opposing longitudinal ends (17, 19) of the semipermeable membrane (10).

15. The stack plate according to claim 14, wherein the gasket (32) is arranged on outer edges of the longitudinal ends (17, 19) of the semipermeable membrane (10).
